Europäisches Patentamt

European Patent Office

Office européen des brevets

(19)

(11) Veröffentlichungsnummer: **0 503 118 A1**

## (12) EUROPÄISCHE PATENTANMELDUNG

(21) Anmeldenummer: **91103922.0**

(51) Int. Cl.⁵: **A44C 27/00**

(22) Anmeldetag: **14.03.91**

(43) Veröffentlichungstag der Anmeldung:
**16.09.92 Patentblatt 92/38**

(84) Benannte Vertragsstaaten:
**CH DE FR GB IT LI**

(71) Anmelder: **BOCK & SCHUPP GMBH & CO. KG Zifferblätterfabrik, Steubenstrasse 21 W-7530 Pforzheim(DE)**

(72) Erfinder: **Bock, Jürgen Hercyniastr. 57c W 7530 Pforzheim(DE)**
Erfinder: **Metzger-Pegau, Karola Drosselweg 8 W 7541 Straubenhardt 4(DE)**
Erfinder: **Zeller, Walter Söllinger Str.50 W 7507 Pfinztal 3(DE)**

(74) Vertreter: **Trappenberg, Hans Wendtstrasse 1 Postfach 1909 W-7500 Karlsruhe 21(DE)**

(54) **Perlmuttprägen.**

(57) Perlmutter mit einem Relief zu versehen, war bisher nur durch die Lichtwirkung beeinträchtigendes Fräsen möglich. Nach der Erfindung wird vorgeschlagen, die mit einem Relief zu versehende Perlmuttfolie unter Zwischenlage einer Modelliermasse zu prägen.

EP 0 503 118 A1

Die Erfindung betrifft ein Verfahren zum Herstellen von Relief-Perlmuttabschnitten, wobei die Perlmutter als von der urspünglichen Weichtierschale gelöste Perlmuttfolie vorliegt.

Perlmutt wird schon im Altertum seiner besonderen Lichtwirkungen wegen insbesondere für Einlegarbeiten verwendet. Perlmutt ist die innerste Schicht der Schale von Weichtieren, insbesondere von Muscheln und Schnecken. Einfallendes Licht wird in dieser Schicht durch Interferenz so gebrochen, daß sich irisierende Farben zeigen. Bis in die heutige Zeit werden Teile dieser Schalen insbesondere für Intarsien verwendet, wobei teilweise die äußere Schale beschliffen wird.

In modernen Verarbeitungswerkstätten allerdings werden lediglich noch Perlmuttfolien eingesetzt, die aus der von den Schalen abgelösten Perlmutter bestehen. Diese dünnen Perlmuttfolien mit einer Stärke von etwa 0,2 mm sind, da sie aus Karbonaten bestehen, sehr spröde und bruchempfindlich. Es wurde daher bisher davon ausgegangen, daß dieses Material durch Umformen nicht bearbeitet werden könne. Um doch gewünschte reliefartige Schmuckstücke herstellen zu können, wurde bisher das Perlmutter von der Schauseite her gefräst. Durch das Fräsen, das nur bei sehr dicken und daher teuren Perlmuttschichten möglich ist, wurde jedoch die irisierende, besonders schöne Lichtwirkung der Perlmutter zumindest gestört. Derartige Arbeiten konnten sich daher auf dem Markt nicht durchsetzen.

Es stellt sich damit die Aufgabe eine Möglichkeit anzugeben, wie derartige dünne, zerbrechliche Perlmuttfolien auf einfache und wirtschaftliche Art und Weise und ohne Verluste der irisierenden Wirkung mit einem Relief versehen werden können. Erreicht wird dies in erfindungsgemäßer Weise, indem so vorgegangen wird, daß der mit einem Relief zu versehende Perlmuttabschnitt auf eine Matrize mit der gewünschten Negativform aufgelegt, auf der freien Seite mit einer Modelliermasse in einer zumindest der Prägetiefe entsprechenden Dicke belegt und sodann mittels eines planen Stempels geprägt wird.

Unter Prägen wird im allgemeinen das Voll- oder Massivprägen, Hohlprägen oder Glattprägen verstanden. Bei dem Voll- oder Massivprägen wird der Werkstoff zum Fließen gebracht, so daß er die Prägeform, die Matrize, ausfüllt. Beim Hohlprägen bleibt hingegen im wesentlichen das Prägematerial in seiner vorherigen Dicke erhalten und wird lediglich in Hohlformen hineingedrückt. Hierbei entspricht jede Erhebung einer Vertiefung an der gegenüberliegenden Stelle. Beim Glattprägen schließlich werden lediglich Teile so geprägt, daß Rauhigkeiten verschwinden. Prägbar sind demnach, nach allgemeiner Vorstellung, alle Werkstoffe, die kalt eine genügend große bildsame Formbarkeit besitzen.

Eine solche bildsame Formbarkeit ist bei der Perlmutter nicht vorhanden, so daß von dieser Definition aus ein Prägen nicht möglich ist. Nun besteht allerdings die Perlmutter aus planparallelen, durch Konchiolin verkitteten Aragonitplättchen. Diese planparallele Anordnung bewirkt die oben angeführte Interferenz und damit die irisierende Lichtwirkung. Es mag sein, daß diese planparallelen, durch Konchiolin verkitteten Aragonitlagen nun doch ein nach dem erfindungsgemäßen Verfahren durchzuführendes Prägen ermöglichen, indem sich diese Lagen gegenseitig verschieben. Auf jeden Fall hat sich gezeigt, daß ein Prägen möglich ist, wenn nach dem Verfahren nach der Erfindung vorgangen wird. Hierbei verteilt die aufgelegte Modelliermasse den Preßdruck des planen Stempels auf die gesamte zu prägende Fläche des Perlmuttabschnitts, so daß das zu prägende Material nicht punktförmig belastet wird. Damit mag der oben beschriebene Effekt der möglichen Lageverschiebung zusammenhängen. Auf jeden Fall hat sich gezeigt, daß, wird in erfindungsgemäßer Weise vorgegangen, diese spröden, zerbrechlichen Perlmuttfolien mit einer deutlich erkennbaren Prägung zu versehen sind. Diese geprägten Perlmuttabschnitte können sodann weiterverarbeitet, also auf eine Unterlage aufgeklebt und den verschiedensten Schmuckzwecken zugeführt werden. So sind damit nach wie vor Intarsienarbeiten möglich, die nun ein reliefartiges Aussehen erhalten oder auch Medaillen, allgemein scheibenförmige Schmuckstücke, wie auch Zifferblätter etc., herzustellen. Außerdem können die geprägten Perlmuttabschnitte auch noch an den Außenkonturen der Prägung gestanzt und dann auf eine entsprechende Unterlage aufgebracht sein, so daß sich ein gemmenartiges, äußerst ansprechendes Aussehen ergibt.

Als Modelliermasse hat sich ein hoch mit anorganischen Füllstoffen gefülltes Mineralwachs bewährt.

**Patentansprüche**

1. Verfahren zum Herstellen von Relief-Perlmuttabschnitten, wobei die Perlmutter als von der ursprünglichen Weichtierschale gelöste Perlmuttfolie vorliegt,
   dadurch gekennzeichnet,
   daß ein Perlmuttabschnitt auf eine Negativmatrize der gewünschten Reliefform aufgelegt, auf der freien Seite mit einer Modelliermasse in einer zumindest der Reliefhöhe entsprechenden Dicke belegt und sodann mittels eines planen Stempels geprägt wird.

2. Verfahren nach Anspruch 1,
   dadurch gekennzeichnet,

daß die Modelliermasse aus einem hoch mit anorganischen Füllstoffen gefüllten Mineralwachs ist.

Europäisches
Patentamt

**EUROPÄISCHER RECHERCHENBERICHT**

Nummer der Anmeldung

EP    91 10 3922

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| | Keine einschlägigen Dokumente gefunden | | A44C27/00 |
| | ----- | | |
| | | | **RECHERCHIERTE SACHGEBIETE (Int. Cl.5)** |
| | | | A44C |

Der vorliegende Recherchenbericht wurde für alle Patentansprüche erstellt

| Recherchenort | Abschlußdatum der Recherche | Prüfer |
|---|---|---|
| DEN HAAG | 06 NOVEMBER 1991 | FAIRBANKS S.A. |